Europäisches Patentamt

(19) European Patent Office

Office européen des brevets

(11) Publication number: **0 116 908**
**B1**

(12) **EUROPEAN PATENT SPECIFICATION**

(45) Date of publication of patent specification: 06.07.88

(51) Int. Cl.⁴: **H 02 P 7/62,** H 02 M 5/458

(21) Application number: 84101333.7

(22) Date of filing: 09.02.84

(54) Control arrangement and system comprising this control arrangement and an inverter for induction motor speed controller.

(30) Priority: 17.02.83 JP 27136/83

(43) Date of publication of application:
29.08.84 Bulletin 84/35

(45) Publication of the grant of the patent:
06.07.88 Bulletin 88/27

(84) Designated Contracting States:
DE FR GB

(56) References cited:
EP-A-0 010 980

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Katto, Masayuki c/o Mitsubishi Denki K.K.**
**Nagoya Works 1-14, Yadaminami 5-chome**
**Higashi-ku Nagoya Aichi (JP)**

(74) Representative: **Lehn, Werner, Dipl.-Ing. et al**
**Hoffmann, Eitle & Partner Patentanwälte**
**Arabellastrasse 4**
**D-8000 München 81 (DE)**

Courier Press, Leamington Spa, England.

## Description

The present invention relates to a control arrangement for a voltage-controlled inverter which subjects an A.C. power source to variable-frequency and variable-voltage conversion and to a control system for driving an induction motor at a variable velocity.

Such apparatus is known from EP—A—010 980.

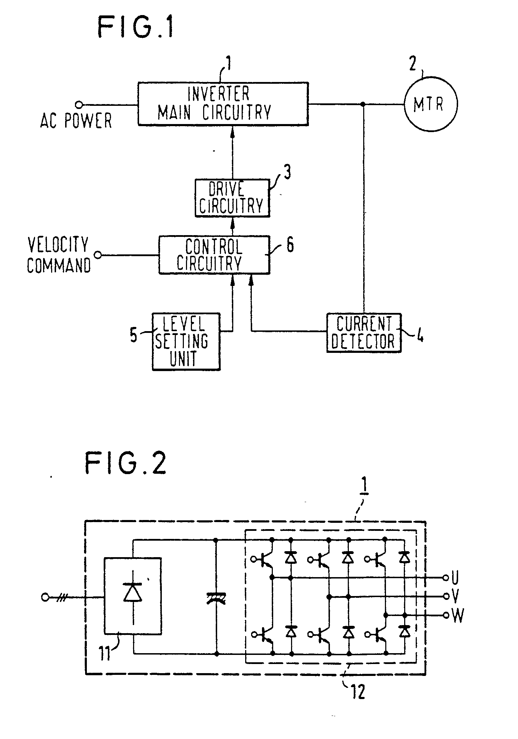

Heretofore, an apparatus of this type has been as shown in Figure 1 of the accompanying drawings. Referring to the Figure, an inverter main circuit 1 subjects an A.C. power source to variable-voltage and variable-frequency conversions. An induction motor 2 is driven at a variable velocity by the inverter. Drive circuitry 3 drives controllable elements within the inverter main circuit 1. A current detector 4 detects an inverter output current. A current level setting unit 5 sets a level for protecting the elements of the inverter main circuitry from overcurrents. Shown at numeral 6 is control circuitry which receives the set signal of the current level setting unit 5 and the current detection value of the current detector 4, and which prepares a variable-frequency and variable-voltage control signal on the basis of a velocity or speed command while monitoring that the inverter output current is not greater than the level set by the current level setting unit.

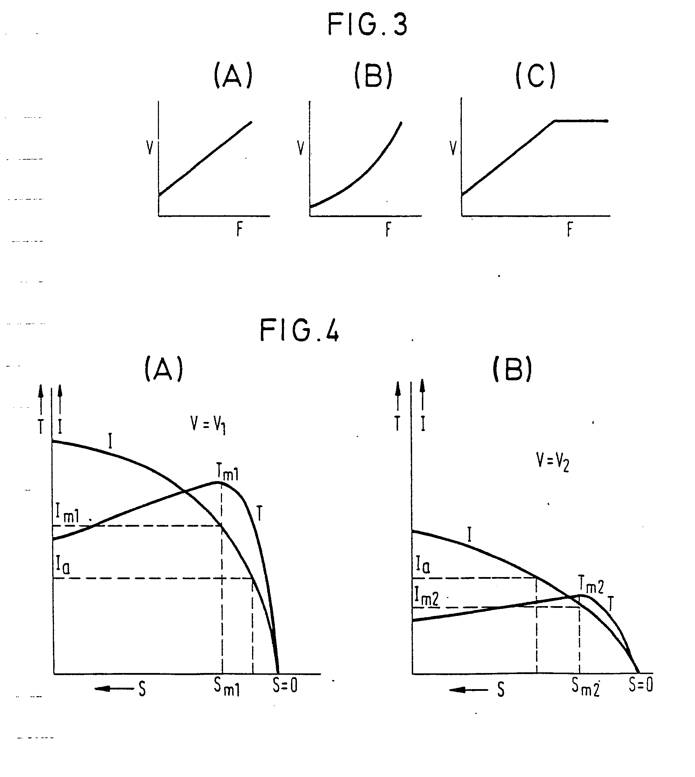

A conventional variable-frequency and variable-voltage control method employing the inverter apparatus of the arrangement in Figure 1 and the relationships between the slip S of the induction motor 2 and the torque T and current I thereof will be described with reference to Figure 3(A) and Figure 4(A). In general, in performing variable-frequency and variable-voltage control, there is employed the voltage V/frequency F ratio-constant control method as illustrated in Figure 3(A), in which the magnetic flux is held constant irrespective of the frequency so as to control a generated torque to a constant magnitude (in a lower frequency region, however, the voltage is set at a somewhat greater value in order to compensate a drop component ascribable to a resistance). The frequency at this time is denoted by $F_1$ and the voltage by $V_1$, and the relationships of the slip S to the generated torque T and current I are illustrated in Figure 4(A). The main circuit elements of the inverter apparatus are selected and determined so as to permit enough current to flow therethrough so as to generate the rated torque of the induction machine having a capacity matching that of the inverter. A current $I_o$, which is set for protecting the elements, is within a current range below that corresponding to a slip value $S_{m1}$ at which a stall torque $T_{m1}$ is generated. Usually, if the current is less than level $I_o$, the motor will be operable stably without exceeding the slip value $S_{m1}$ and will not stall.

The operation of the apparatus in Figure 1 will now be further described with reference to Figure 2—Figure 4(B). As shown by way of example in Figure 2, the inverter main circuitry 1 consists of a three-phase full-wave diode converter portion 11 which converts A.C. supply voltages into D.C., a smoothing capacitor which smooths the D.C. voltages, and a three-phase inverter portion 12 which is composed of transistors and diodes and which subjects the D.C. voltages to variable-frequency and variable-voltage conversion. The maximum permissible current $I_o$ level is set by the current level setting unit 5 in order to protect the semiconductor elements of the inverter portion 12 from overcurrents.

Upon receiving the velocity command, the control circuitry 6 determines switching signals for the transistors of the inverter portion 12 on the basis of the received command in order to deliver a voltage and a frequency corresponding to the velocity command in accordance with a predetermined voltage/frequency ratio pattern or characteristic. In consequence, the inverter performs the variable-voltage and variable-frequency conversion operation in response to the signal of the driver circuitry 3, and the induction motor 2 rotates at a velocity at which the motor output torque (determined from the instant voltage/frequency output) balances the load torque. At this time, the inverter output current is determined from the output voltage/frequency and the rotating velocity, and the current is detected by the current detector 4 and a signal representing the current is supplied to the control circuitry 6. From this signal, the amount of slip can be computed for speed control purposes. If the current detection signal is smaller than the current level setting signal set by the level setting unit 5, the operation will be continued without any change. Normally, the current level setting value $I_o$ is greater than the current required at the rated torque of an induction motor corresponding to the inverter capacity, and the operation can be normally continued at and near the rated load.

In contrast, if the load torque becomes too great or the slip increases due to rapid acceleration, the inverter output current will also increase. If, as a consequence, the current value becomes greater than the current level setting value, the inverter elements might be damaged. The increase of slip is therefore suppressed by lowering the frequency or preventing increase of the frequency, so that the induction motor is controlled to operate at or below the current level setting value. If, even with this measure, the output current remains above the current level setting value without decreasing, the transistors will be turned "off" to stop the inverter so as to protect the elements.

In the conventional speed controller for the inverter as described above, a current level for protection of the elements is set as the current setting level. If the capacity of the load induction motor is selected to be smaller as compared with the inverter capacity, or the output voltage/frequency ratio is set to be small in conformity with the load as illustrated in Figure 3(B), or the output voltage/frequency ratio is set to be small at and above a rated frequency for a constant output operation as illustrated in Figure 3(C), then a situation will arise where the current setting level $I_o$ is greater than that corresponding to a slip value $S_{m2}$ generating a stall torque $T_{m2}$ as illustrated in Figure 4(B). In this case, even when the load has increased, the motor continues to operate with the voltage/frequency ratio remaining unchanged, until the current reaches $I_o$. This leads to the disadvantage that the motor stalls due to its operation entering a slip region greater than the slip value $S_{m2}$.

An object of the present invention is to provide a control arrangement suitable for use to eliminate or at least reduce the disadvantage of the conventional apparatus as stated above.

According to one aspect of the invention, there is provided a control arrangement for an inverter having controllable switching elements wherein an A.C. power source is subjected to variable-frequency and variable-voltage conversion for speed control of an induction motor, the arrangement comprising: a first current level setting means arranged to set a first predetermined current level within the permitted current range of the switching elements of said inverter; a second current level setting means arranged to set a second current level ($I_m$); a current detector for detecting inverter output current; and control means for controlling the switching elements of said inverter on the basis of a speed command and the output of said current detector, characterised by: said second current level setting means being arranged to set said second current level ($I_m$) to correspond to a slip value of said motor at which stall torque is generated; a current level selector being arranged to select and deliver a signal representing that one of the current levels which is the smaller; and said control means being arranged to control the inverter such that the inverter output current is smaller than the selected current level.

According to another aspect of the invention, there is provided a control system comprising: an induction motor; and an inverter having switching elements for producing a supply current for said induction motor, characterised by a control arrangement according to said one aspect.

The second setting means sets the second current level determined from the frequency/voltage ratio in the present operation or the load characteristics of the induction motor, and the inverter main circuitry is controlled by comparing the smaller one of the current level setting signals with the output current detection value of the inverter, whereby the motor can operate in a stable region where it does not stall, under any driving condition simultaneously with attaining the protection of the switching elements.

For a better understanding of the invention, and to show how the same may be carried into effect, reference will now be made, by way of example, to the accompanying drawings, in which:

Figure 1 is a block diagram showing a prior art inverter control apparatus;

Figure 2 is an arrangement diagram of inverter main circuitry;

Figure 3(A), 3(B) and 3(C) are characteristic diagrams for explaining a method of controlling an induction motor on the basis of a voltage to frequency ratio;

Figure 4(A) and 4(B) are characteristic diagrams depicting relationships of torque, current and slip;

Figure 5 is a block diagram showing an embodiment of the present invention;

Figure 6 is a circuit diagram showing the circuit arrangement of a control apparatus according to the present invention; and

Figure 7 is a circuit diagram showing the internal arrangement of driver circuitry.

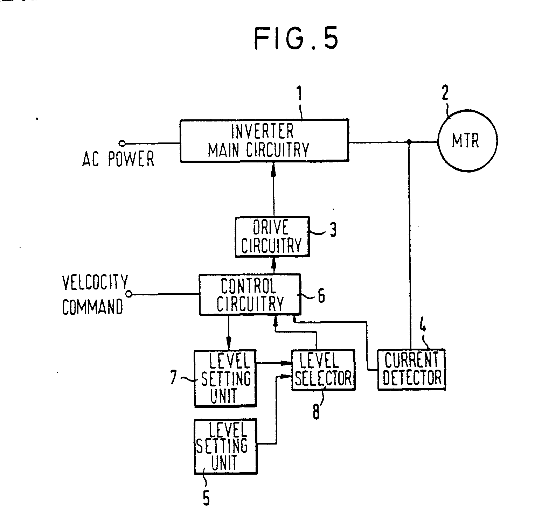

An embodiment of the present invention will now be described with reference to Figure 5 in which parts corresponding to those in Figure 1 have the same reference numerals. In Figure 5, numeral 7 designates a second current level setting unit which sets a current level $I_m$ which flows at the slip value $S_m$ corresponding to the stall torque $T_m$, in accordance with the characteristic of the load induction motor and the voltage/frequency ratio in the present operation. Numeral 8 designates a current level selector which selects the smaller one of the respective set outputs of current setting unit 5 and the second current level setting unit 7. While comparing the current detection value detected by the current detector 4 and the current level selected by the level selector 8, the control circutry 6 generates switching signals for the switching elements of the inverter and controls the inverter in accordance with the voltage/frequency ratio so as to operate the inverter on the basis of the velocity command.

With the arrangement of Figure 5, the permissible current level $I_o$ is set in the first current level setting unit 5 so as to protect the transistors or diodes as the semiconductor elements of the inverter portion 1 from overcurrents, while the current level $I_m$ to flow at the slip value corresponding to the stall torque is set in the second current level setting unit 7 in association with the drive conditions of the characteristic of the particular induction motor and the voltage/frequency ratio delivered by the inverter. On the basis of the velocity command, the control circuitry 6 determines the switching signals of the transistors of the inverter portion 12 and subjects the inverter to the variable-voltage and variable-frequency operation through the driver circuitry 3 so as to provide a voltage and a frequency corresponding to the velocity command in accordance with a predetermined voltage/frequency ratio characteristic. In this way, it controls the induction motor 2 so as to rotate at a velocity at which the output torque and the load torque balance. The inverter output current becomes a value which is determined by the induction machine characteristic, the voltage/frequency ratio and the rotational speed.

Now, the drive condition illustrated in Figure 4(A) will be taken into consideration. Since the set value $I_o$ of the first current level setting unit 5 is smaller than the set value $I_{m1}$ of the second current level setting unit 7, the first current level setting value $I_o$ is delivered from the current level selector 8. Accordingly, even in a case where the current has increased due to an augmented slip attributed to the increase of the load, rapid acceleration or the like; when it reaches the $I_o$ value level, the control circuitry 6 controls the inverter so as to decrease the frequency or to stop the increase of the frequency in accordance with the predetermined voltage/frequency ratio characteristic so as to reduce the slip. Thus, the motor is permitted to operate without stalling beyond the slip $S_{m1}$ corresponding to the stall torque $T_{m1}$ and without exceeding the permissible current level of the semiconductor elements.

On the other hand, in a case where, as illustrated in Figure 4(B), the motor capacity is small as compared with the inverter capacity or the voltage/frequency ratio is reduced to perform an underexcitation operation, the first current level setting value $I_o$ might become greater than the second current level setting value $I_{m2}$. At this time, the set value $I_{m2}$ is delivered from the current level selector 8. Accordingly, if the current increases due to an augmented slip attributed to the rise of the load, rapid acceleration or the like and approaches the $I_{m2}$ level, the frequency is decreased or stopped from increasing in accordance with the predetermined voltage/frequency characteristic, to suppress the increase of the slip. The motor can therefore be operated without stalling beyond the slip of the stall torque point $T_{m2}$ and within the permissible current level of the semiconductor elements. Needless to say, it is one aspect of control means in the present invention to further turn "off" the drive signals of the controllable elements constituting the inverter, so as to prevent any influence on the inverter and other systems.

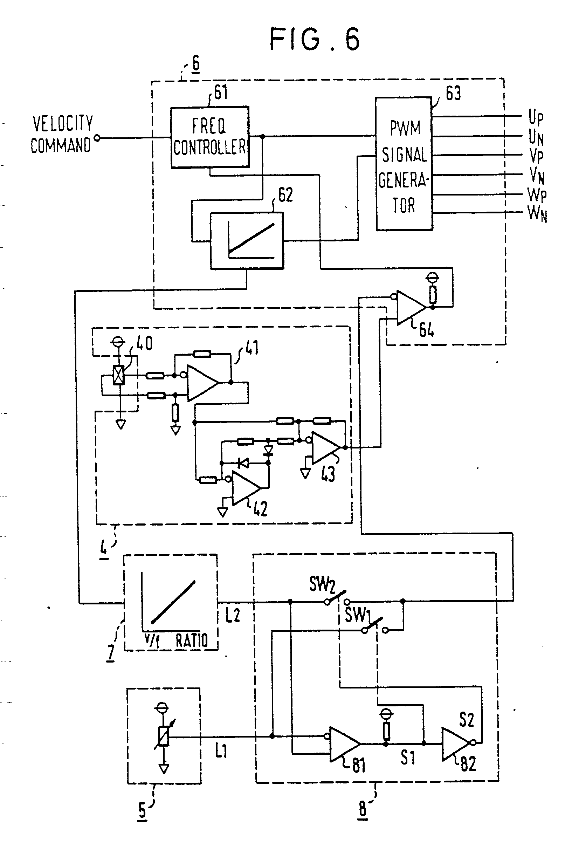

Figure 6 illustrates details of the control apparatus shown in Figure 5.

The current detector 4 is shown as employing a magnetosensitive device. A signal proportional to the output current of the inverter main circuitry 1 is provided from the magnetosensitive device 40, and it is amplified and rectified by an amplifier 41 and absolute value circuits 42 and 43 which rectify the output of the amplifier 41. The absolute value circuits 42 and 43 are disposed for realizing a comparison in the same polarity as that of the output of the current level selector 8 and for quickening the detection of the output current. Although, in the arrangement of Figure 6, only one phase is furnished with the detector, it is more preferable to furnish two phases or three phases with the detectors. The detection may well be executed by sensing the current of the D.C. portion of the inverter main circuitry 1.

The first level setting unit 5 is constituted by a variable resistor or the like.

The control circuitry 6 comprises a frequency controller 61 (which performs an acceleration or deceleration control in a predetermined time on the basis of the velocity command and the result of the comparison between the current values of the current level selector 8 and the current detector 4), a voltage/frequency setting unit 62 which receives the output of the controller 61 and which delivers a voltage command on the basis of a predetermined voltage/frequency ratio, a PWM (pulse width modulation) signal generator 63 (which receives the outputs of the controller 61 and the setting unit 62 and which delivers PWM signals for the switching elements of the respective phases corresponding to their conditions), and a comparator 64 which compares the outputs of the current detector 4 and the level selector 8 and which delivers the result of the comparison to the controller 61.

When the output of the current detector 4 is smaller than that of the selector 8, that is, when the output of the comparator 64 is at a low (L) level, the controller 61 regards the induction motor as being in the normal state and performs the acceleration or deceleration control in the predetermined time in response to the velocity command. The setting unit 62 delivers the predetermined voltage command in accordance with the output of the controller 61. The signal generator 63 produces and delivers the PWM signals in accordance with the commands of the controller 61 and the setting unit 62.

When the detection value of the current detector 4 is greater than the output level of the selector 8, that is, when the output of the comparator 64 is at a high (H) level, the controller 61 regards the induction motor as being in an abnormal state and performs the processing of decreasing the present output frequency of the inverter or stopping the increase thereof with preference taken over the velocity command, whereby the control apparatus controls the motor so as to suppress the increase of the slip.

The second level setting unit 7 has a built-in function generator which gives a current level at a slip generating a stall torque which current level corresponds to a particular voltage/frequency ratio. Thus, unit 7 provides the current level which corresponds to a voltage/frequency ratio signal delivered from the setting unit 62 of the control circuitry 6.

The level selector 8 comprises switches $SW_1$ and $SW_2$ which select the outputs of the first and second level setting units 5 and 6, and a comparator 81 and an inverter 82 which produce signals for controlling the switches.

The switches $SW_1$ and $SW_2$ are closed when the applied control signals are "H", and are opened when they are "L". When the output $L_1$ of the first setting unit 5 is smaller than the output $L_2$ of the second setting unit 7, the output of the comparator 81 assumes the "H" level, and the control signals for the switches $SW_1$ and $SW_2$ becomes $S_1=H$ and $S_2=L$ respectively, so that the output $L_1$ of the first setting unit 5 is supplied from the selector 8. When the relation of the magnitudes of the outputs $L_1$ and $L_2$ is reversed, the selector 8 operates conversely to the above. Accordingly, either smaller one of the outputs of the level setting units 5 and 7 is selected by and delivered from the selector 8 at all times.

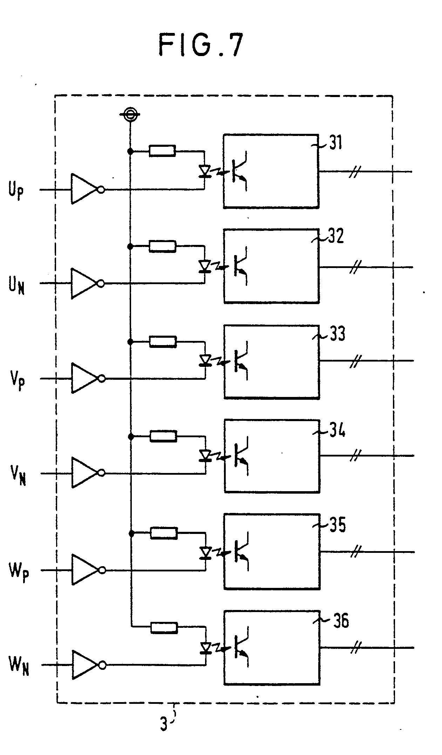

Figure 7 shows the driver circuitry 3. The output signals of the PWM signal generator 63 (Figure 6) are transmitted to driver circuits 31—36 through photocouplers or other like isolating devices whereupon the respective driver circuits 31—36 control the corresponding transistors of the inverter portion 12 (Figure 2).

Although, in the embodiment, the example shown in Figure 2 has been referred to as the arrangement of the inverter, a different inverter arrangement may well be used. In addition, although the current detection point has been taken on the inverter output side, it may be any point at which the output current and the current flowing through each element can be detected.

As set forth above, according to the present invention, there are employed a first current level setting unit which sets a level for protecting elements, and a second current level setting unit which sets a current that prevents a stall torque slip point from being exceeded and that is determined in association with the characteristic of a load induction motor and a voltage/frequency ratio being presently delivered, and either smaller current level is selected by a current level selector, to control a frequency so as to lower or to stop rising lest the slip frequency of the level current should be exceeded. Therefore, whatever voltage/frequency ratio is set to drive the motor or whatever induction motor is connected, the motor can operate in a stable region without stalling or without damaging the elements.

## Claims

1. A control arrangement for an inverter (1) having controllable switching elements wherein an A.C. power source is subjected to variable-frequency and variable-voltage conversion for speed control of an induction motor (2), the arrangement comprising: a first current level setting means (5) arranged to set a first predetermined current level ($I_o$) within the permitted current range of the switching elements of said inverter; a second current level setting means (7) arranged to set a second current level ($I_m$); a current detector (4) for detecting inverter output current; control means (6) for controlling the switching elements of said inverter (1) on the basis of a speed command and the output of said current detector (4), characterised by: said second current level setting means (7) being arranged to set said second current level ($I_m$) to correspond to a slip value of said motor at which stall torque is generated; a current level selector (8) being arranged to select and deliver a signal representing that one of the current levels which is the smaller; and said control means (6) being arranged to control the inverter such that the inverter output current is smaller than the selected current level.

2. A control arrangement according to claim 1 characterised in that the control means (6) is connected to receive the outputs of said current level selector (8) and said current detector (4), and is arranged to compare the two output values and to generate control signals for the switching elements of said inverter (1) on the basis of the speed command.

3. A control arrangement according to claim 2 characterised in that said control means (6) is arranged to supply said control signals in such manner that said inverter (1) can deliver a voltage and a frequency corresponding to said command in accordance with a predetermined voltage/frequency ratio pattern.

4. A control arrangement according to claim 3 characterised in that said control means (6) is arranged to produce said control signals in such manner that the output frequency of said inverter is decreased or held constant in accordance with a predetermined voltage/frequency pattern when the output value of said current detector (4) becomes greater than that of said current level selector (8).

5. A control system comprising an induction motor (2) and an inverter (1) having switching elements (12) for producing a supply current for said induction motor (2), characterised by a control arrangement according to any one of claims 1 to 4.

6. A control system according to claim 5 characterised in that the second current level setting means (7) is arranged to set its current level in dependence upon the load characteristic of said induction motor (2) and the voltage/frequency ratio delivered by said inverter (1).

7. A control system according to claim 6 characterised in that said control means (6) is arranged to supply said second current level setting means (7) with a signal which represents the voltage/frequency ratio delivered by said inverter (1).

8. A control system according to any one of claims 5 to 7 characterised in that said current detector (4) is arranged to detect current flowing between said inverter (1) and the induction motor (2).

## Patentansprüche

1. Regelanordnung für einen Inverter (1) mit steuerbaren Schaltelementen, bei der eine Wechselspannungs-Energiequelle einer frequenzvariierbaren und spannungsvariierbaren Umwandlung zum Regeln der Umdrehungsgeschwindigkeit eines Induktionsmotors (2) unterworfen wird, wobei die Anordnung enthält:

erste Strompegeleinstellmittel (5), die zum Einstellen eines ersten vorbestimmten Strompegels ($I_o$) innerhalb des erlaubten Strombereichs der Schaltelemente des Inverters angeordnet sind;

zweite Strompegeleinstellmittel (7), die zum Einstellen eines zweiten Strompegels ($I_m$) angeordnet sind;

einen Stromdetektor (4) zum Erfassen eines Ausgangsstroms des Inverters;

Steuermittel (6) zum Steuern der Schaltelemente des Inverters (1) auf der Basis eines Geschwindigkeitsbefehls und der Ausgangsgröße des Stromdetektors (4), dadurch gekennzeichnet,

daß die zweiten Strompegeleinstellmittel (7) zum Einstellen des zweiten Strompegels ($I_m$) entsprechend einem Schlupfwert des Motors, bei dem dessen Kippmoment entwickelt wird, angeordnet sind;

daß eine Strompegelauswahlvorrichtung (8) zum Auswählen und Abgehen eines Signals entsprechend demjenigen der Strompegel, der kleiner ist, ausgebildet ist;

und daß die Steuermittel (6) zum Steuern des Inverters derart angeordnet sind, daß der Ausgangsstrom des Inverters kleiner ist als der ausgewählte Strompegel.

2. Regelanordnung nach Anspruch 1, dadurch gekennzeichnet, daß die Steuermittel (6) zum Empfangen der Ausgangsgrößen der Strompegelauswahlvorrichtung (8) und des Stromdetektors (4) geschaltet und zum Vergleichen der zwei Ausgangsgrößen sowie zum Erzeugen von Steuersignalen für die Schaltelemente des Inverters (1) auf der Basis des Geschwindigkeitsbefehls angeordnet sind.

3. Regelanordnung nach Anspruch 2, dadurch gekennzeichnet, daß die Steuermittel (6) zum Liefern der Steuersignale in einer derartigen Weise liefern, daß der Inverter (1) eine Spannung und eine Frequenz entsprechend dem Befehl in Übereinstimmung mit einem vorbestimmten Spannungs/Frequenzverhältnismuster abgeben kann, angeordnet sind.

4. Regelanordnung nach Anspruch 3, dadurch gekennzeichnet, daß die Steuermittel (6) angeordnet sind zum Erzeugen der Steuersignale in einer derartigen Weise, daß die Ausgangsfrequenz des Inverters in Übereinstimmung mit einem vorbestimmten Spannungs/Frequenzverhältnismuster vermindert oder konstant gehalten wird, wenn die Ausgangsgröße des Stromdetektors (4) größer als die der Strompegelauswahlvorrichtung (8) ist, angeordnet sind.

5. Regelsystem mit einem Induktionsmotor (2) und einem Inverter (1) mit Schaltelementen zum Erzeugen eines Versorgungsstroms für den Induktionsmotor (2), gekennzeichnet durch eine Regelanordnung nach einem der Ansprüche 1 bis 4.

6. Regelsystem nach Anspruch 5, dadurch gekennzeichnet, daß die zweiten Strompegeleinstellmittel (7) zum Einstellen ihres Strompegels abhängig von der Lastcharacteristik des Induktionsmotors (2) und des von dem Inverter (1) gelieferten Spannung/Frequenzverhältnisses angeordnet sind.

7. Regelsystem nach Anspruch 6, dadurch gekennzeichnet, daß die Steuermittel (6) zum Versorgen der zweiten Strompegeleinstellmittel (7) mit einem Signal, welches das vom Inverter (1) gelieferte Spannungs/Frequenzverhältnis darstellt, angeordnet sind.

8. Regelsystem nach einem der Ansprüche 5 bis 7, dadurch gekennzeichnet, daß der Stromdetektor (4) zum Erfassen von zwischen dem Inverter (1) und dem Induktionsmotor (2) fließendem Strom angeordnet ist.

## Revendications

1. Dispositif de contrôle pour un inverseur (1) comportant des éléments de commutation contrôlables dans lequel une source de courant alternatif d'alimentation est soumise à une conversion à fréquence variable et à tension variable pour la régulation de vitesse d'un moteur à induction (2), le dispositif comprenant: un premier moyen de réglage de niveau de courant (5) agencé pour établir un premier niveau de courant prédéterminé ($I_o$) dans l'intervalle de valeurs de courant admises des éléments de commutation de l'inverseur; un deuxième moyen de réglage de niveau de courant (7) agencé pour établir un deuxième niveau de courant ($I_m$); un détecteur de courant (4) pour détecter un courant de sortie d'inverseur; un moyen de contrôle (6) pour contrôler les éléments de commutation de l'inverseur (1) selon une commande de vitesse et le signal de sortie du détecteur de courant (4), caractérisé en ce que: le deuxième moyen de réglage de niveau de courant (7) est agencé pour établir le deuxième niveau de courant ($I_m$) afin qu'il corresponde à une valeur de glissement du moteur où un couple maximal est généré; un sélecteur de niveau de courant (8) est agencé pour sélectionner et délivrer un signal représentant le niveau parmi les niveaux de courant qui est le plus petit; et en ce que le moyen de contrôle (6) est agencé pour contrôler l'inverseur de telle sorte que le courant de sortie d'inverseur est inférieur au niveau de courant sélectionné.

2. Dispositif de contrôle selon la revendication 1, caractérisé en ce que le moyen de contrôle (6) est connecté pour recevoir les signaux de sortie du sélecteur de niveau de courant (8) et du détecteur de courant (4), et est agencé pour comparer les deux valeurs de sortie et engendrer des signaux de contrôle pour les éléments de commutation de l'inverseur (1) selon la commande de vitesse.

3. Dispositif de contrôle selon la revendication 2, caractérisé en ce que le moyen de contrôle (6) est agencé pour fournir les signaux de contrôle de telle manière que l'inverseur (1) peut délivrer une tension et une fréquence correspondant à la commande selon un modèle de rapport de tension/fréquence prédéterminé.

4. Dispositif de contrôle selon la revendication 3, caractérisé en ce que le moyen de contrôle (6) est agencé pour produire les signaux de contrôle de telle manière que la fréquence de sortie de l'inverseur est dimunué ou maintenue constante selon un modèle de tension/fréquence prédéterminé quand la valeur de sortie du détecteur de courant (4) devient supérieure à celle du sélecteur de niveau de courant (8).

5. Système de contrôle comprenant un moteur à induction (2) et un inverseur (1) comportant des éléments de commutation (12) pour produire un courant d'alimentation destiné au moteur à induction (2), caractérisé par un dispositif de contrôle selon l'une quelconque des revendications 1 à 4.

6. Système de contrôle selon la revendication 5, caractérisé en ce que le deuxième moyen de réglage de niveau de courant (7) est agencé pour établir son niveau de courant selon la caractéristique de charge du moteur à induction (2) et le rapport de tension/fréquence délivré par l'inverseur (1).

7. Système de contrôle selon la revendication 6, caractérisé en ce que le moyen de contrôle (6) est agencé pour fournir au deuxième moyen de réglage de niveau de courant (7) un signal qui représente le rapport de tension/fréquence délivré par l'inverseur (1).

8. Système de contrôle selon l'une quelconque des revendications 5 à 7, caractérisé en ce que le détecteur de courant (4) est agencé pour détecter le courant passant entre l'inverseur (1) et le moteur à induction (2).

## FIG.1

## FIG.2

# FIG.3

(A)          (B)          (C)

# FIG.4

(A)          (B)

**0 116 908**

# FIG.5

INVERTER MAIN CIRCUITRY — 1

AC POWER

MTR — 2

DRIVE CIRCUITRY — 3

VELCOCITY COMMAND

CONTROL CIRCUITRY — 6

LEVEL SETTING UNIT — 7

LEVEL SELECTOR — 8

CURRENT DETECTOR — 4

LEVEL SETTING UNIT — 5

# FIG.6

# FIG.7